# NEUE EUROPÄISCHE PATENTSCHRIFT

(11) **EP 1 576 263 B2**
(45) Veröffentlichungstag und Bekanntmachung des Hinweises auf die Entscheidung über den Einspruch: **04.09.2013**
(45) Hinweis auf die Patenterteilung: 21.06.2006
(21) Anmeldenummer: 04712512.5
(22) Anmeldetag: 19.02.2004
(51) Int. Cl.: F01N 13/18, F16L 27/111, F16L 11/16, F16L 51/02

(54) **FLEXIBLES LEITUNGSELEMENT**
FLEXIBLE PIPE ELEMENT
ELEMENT DE CONDUIT FLEXIBLE

(30) Priorität: 19.02.2003 DE 20302659 U
(43) Veröffentlichungstag der Anmeldung: 21.09.2005
(73) Patentinhaber: Witzenmann GmbH, 75175 Pforzheim (DE)
(72) Erfinder: GUKELBERGER, Marc, 76275 Ettlingen (DE)
(74) Vertreter: Lemcke, Brommer & Partner
(86) Internationale Anmeldenummer: PCT/EP2004/001599
(87) Internationale Veröffentlichungsnummer: WO 2004/074651

(56) Entgegenhaltungen:
- US-A- 5 456 291
- US-B1- 6 240 969

## Beschreibung

Die Erfindung betrifft ein flexibles Leitungselement, insbesondere für die Abgasanlage eines Kraftfahrzeugs, mit einem schraubengangförmigen oder ringgewellten Metallbalg, mit einem koaxial innerhalb des Metallbalgs angeordneten, schraubengangförmig gewickelten oder ringförmige Segmente aufweisenden Metallschlauch, dessen Außenquerschnitt kleiner als der lichte Innenquerschnitt des Metallbalgs ist, und mit einem den Metallbalg außen zumindest bereichsweise umgebenden Außengestricke.

Solche flexiblen Leitungselemente werden in die Abgasleitungen von Kraftfahrzeugen eingesetzt, um einerseits Lastwechselbewegungen und Schlechtweganregungen des Motors von der am Fahrzeugboden befestigten Abgasanlage abzukoppeln sowie andererseits Motorschwingungen durch nicht ausgeglichene, freie Massenkräfte von der Abgasanlage und somit vom Fahrzeugboden zu entkoppeln. Die Bewegungen durch Lastwechsel und Schlechtweganregungen führen nicht zuletzt wegen der Schwingungseigenschaften des Antriebsstranges eines Kraftfahrzeugs zu Schwingungen mit einer Frequenz von 0 Hz bis etwa 20 Hz und relativ großen Amplituden, welche die Lebensdauer der Abgasanlage bzw. von deren Aufhängungen beeinträchtigen können. Die Motorschwingungen liegen bei Vierzylinder-Reihenmotoren, deren nutzbarer Drehzahlbereich typischerweise von 600 1/min (Leerlauf) bis 7500 1/min (Höchstdrehzahl) reicht, wegen der dominanten zweiten Motorordnung bei dieser Motorbauweise zwischen etwa 20 Hz und 250 Hz. Diese Schwingungen verursachen Brummgeräusche durch von schwingenden Bauteilen abgestrahlten Luftschall sowie störende Vibrationen im Fahrzeuginnenraum. Außerdem können die Eigenschwingungen der Abgasanlage angeregt werden, die wegen ihrer großen Amplituden Schäden verursachen.

Ein flexibles Leitungselement der Eingangs genannten Art ist beispielsweise aus der WO 02/29302 A1 bekannt. Das dort beschriebene Leitungselement besteht aus einem Metallbalg, der außen mit einem Gestrickeschlauch umgeben ist, sowie einem koaxial innerhalb des Balges angeordneten Metallschlauch, der aus Agraffprofilen mit S-förmigem Querschnitt besteht und zur Strömungsführung sowie zum thermischen Schutz des Metallbalges gegen die heißen Abgase des Verbrennungsmotors dient. Zwischen dem Metallbalg und dem Agraffschlauch ist ein Abstandhalter angeordnet, der sich sowohl an der Innenseite des Metallbalgs als auch an der Außenseite des Agraffschlauchs in Anlage befindet, so dass der Agraffschlauch nicht gegen den Metallbalg schlagen kann. Darüber hinaus kann der Abstandhalter eine schwingungsdämpfende Wirkung aufweisen. Um eine erhöhte Beweglichkeit bei Lastwechselbewegungen und dergleichen bei gleichwohl guten Entkopplungseigenschaften für Motorschwingungen zu erzielen, ist in dieser Schrift vorgeschlagen worden, das Leitungselement so auszulegen, dass es eine Gesamtsteifigkeit von höchstens 5 N/mm aufweist.

Der vorliegenden Erfindung liegt nun die Aufgabe zugrunde, ein flexibles Leitungselement der Eingangs genannten Art hinsichtlich seiner schwingungsentkoppelnden Eigenschaften weiter zu verbessern.

Gelöst ist diese Aufgabe durch ein flexibles Leitungselement mit den Merkmalen des beigefügten Schutzanspruches 1.

Vorteilhafte Weiterbildungen der Erfindung sind in den Schutzansprüchen 2 bis 9 niedergelegt.

Erfindungsgemäß ist erkannt worden, dass es nicht ausreicht, eine möglichst geringe Gesamtsteifigkeit des eingangs genannten flexiblen Leitungselementes zu wählen. Zwar ergibt sich hierdurch eine hohe Beweglichkeit des Leitungselementes bei einmaligen Auslenkungen - zumindest solange der Agraffschlauch die Bewegung nicht blockiert - jedoch muss dann insbesondere ein sehr weicher Metallbalg verwendet werden, der im Gegenzug in einem typischen Frequenzbereich zwischen 40 Hz und 80 Hz eine Eigenfrequenz aufweist. Denn das Verringern der Steifigkeit des Metallbalgs alleine durch Verlängerung des Leitungselementes ist in der typischen Einbausituation bei einem Kraftfahrzeug normalerweise nicht durchführbar. Um nun zu verhindern, dass sich insbesondere im Metallbalg Resonanzschwingungen ausbilden, müssen die dämpfenden Elemente, wie insbesondere das Außengestricke oder ein gegebenenfalls vorhandener Abstandhalter entsprechend schwingungsdämpfend dimensioniert werden. Dies wiederum erhöht die Gesamtsteifigkeit des Leitungselementes.

Aufgrund dieser verschiedenen zu beachtenden Randbedingungen in einem flexiblen Leitungselement der eingangs genannten Art kann es nach dem Stand der Technik also durchaus vorkommen, dass ein flexibles Leitungselement eine Gesamtsteifigkeit von unter 5 N/mm aufweist, dass es jedoch gleichzeitig Anregungsfrequenzen gibt, die im vor allem bei Vierzylinder-Reihenmotoren interessierenden Frequenzbereich Versteifungen verursachen, so dass bei einzelnen Motordrehzahlen verstärkt Vibrationen oder Brummgeräusche in den Innenraum des Kraftfahrzeuges gelangen.

Gemäß der vorliegenden Erfindung gilt es daher, nicht eine statische Gesamtsteifigkeit des Leitungselementes zu optimieren, sondern das flexible Leitungselement so auszulegen, dass seine dynamische Transfersteifigkeit in Axialrichtung über einen Frequenzbereich der Anregungsschwingung von 80 Hz bis 140 Hz hinweg unter 50 N/mm liegt. Diese dynamische Transfersteifigkeit versteht sich bei einer Anregungsamplitude von 0,1 mm und Raumtemperatur; sie ist gemäß der Norm EN ISO 10846-1 definiert. Eine statische Vorlast ist nicht gegeben bzw. ist nur insofern gegeben, als das flexible Leitungselement in seiner Einbaulänge betrachtet wird. Um einen praktikablen Kompromiss zwischen dem Dimensionierungsaufwand für das Leitungselement und der gewollten dynamischen Transfersteifigkeit zu erzielen, kann das erfindungsgemäße flexible Leitungselement insbesondere dadurch definiert sein, dass die dynamische Transfersteifigkeit in Axialrichtung über einen Frequenzbereich der Anregungsschwingung von 20 bis 250 Hz, oder weiter bevorzugt von 0 bis 250 Hz unter 50 N/mm liegt.

Nur mit den erfindungsgemäß erkannten dynamischen Transfersteifigkeiten ist ein flexibles Leitungselement der Eingangs genannten Art in der Lage, in den insbesondere für einen Vierzylinder-Reihenmotor wichtigen Motorschwingungs-Frequenzbereichen diese Motorschwingungen von einer Weitergabe an die Abgasanlage und somit an die Karosserie des Kraftfahrzeuges zu entkoppeln. Verbreitet zu beobachtende Brummfrequenzen bei bestimmten Drehzahlen des Motors, die laufend durchfahren werden, gehören somit der Vergangenheit an.

Vorzugsweise ist der Innendurchmesser des Außengestrickes kleiner als der Außendurchmesser des Metallbalges. Dies führt zu einer festen Anlage des Außengestrickes am Metallbalg, wobei sich dessen Form innenseitig dem Metallbalg anpasst. Die Dämpfungswirkung des Außengestrickes insbesondere zur Unterdrückung von Resonanzschwingungen des Metallbalges wird hierdurch vorteilhaft verbessert.

Das erfindungsgemäße flexible Leitungselement kann, wie an sich bekannt, an seinen Enden jeweils eine das Außengestricke am jeweiligen Metallbalgende festlegende Endhülse aufweisen. Diese ist selbstverständlich dann auch so auszulegen, dass das gesamte Bauteil, inklusive Endhülsen, die erfindungsgemäßen Randbedingungen erfüllt.

Um die erfindungsgemäß geringe dynamische Transfersteifigkeit erzielen zu können, ist es zweckmäßig, den Metallbalg in einer Wandstärke von weniger als 0,2 mm auszubilden. Nach dem derzeitigen Stand der Technik bewegen sich die Wandstärken von entsprechenden Metallbälgen in einem Bereich von 0,2 mm bis 0,4 mm.

Das erfindungsgemäße flexible Leitungselement kann mit einem zwischen dem Metallbalg und dem Metallschlauch angeordneten, an sich bekannten Abstandhalter versehen sein. Ein solcher Abstandhalter, der insbesondere zur Vermeidung von Geräuschemissionen dient, die ein an den Metallbalg anschlagender Metallschlauch verursacht, kann so ausgebildet sein, dass er den Metallschlauch zumindest lokal gegen den Metallbalg abstützt und so den Metallschlauch stabilisiert.

Wie ebenfalls an sich bekannt, kann der Abstandhalter aus einem Gestricke gebildet sein und insofern ebenfalls entscheidend zur Dämpfung des Metallbalgs und gegebenenfalls auch des Metallschlauchs beitragen. Gleichwohl kann er als Schlauch, als Schlauchabschnitt, als Helix oder als eine Mehrzahl von Streifen ausgebildet sein. Die Herstellungsart und die Formung des Abstandhalters hängt davon ab, welche Dämpfungseigenschaften damit erzielt oder auch vermieden werden sollen.

Im Rahmen der Erfindung, ist der Metallschlauch so ausgebildet, dass die einzelnen Wicklungen oder die einzelnen ringförmigen Segmente zumindest in der Stauchlage des Metallschlauchs keinen Formschluss mit der jeweils benachbarten Wicklung oder dem jeweils benachbarten Segment aufweisen. Damit ist das Konzept des Agraffschlauchs verlassen; denn bei diesem sind dessen Profilkanten derart nach innen zurück gebogen, dass sie ein axiales Bord bilden, welches mit dem axialen Bord des jeweils benachbarten Segments bzw. der jeweils benachbarten Wicklung auch in der Stauchlage des Schlauchs radial überlappt. Dies macht den Agraffschlauch insbesondere Widerstandsfähig gegen Torsionsbelastungen, die aber im Zusammenhang des vorliegenden flexiblen Leitungselementes nicht vorkommen, da der Metallbalg an sich bereits torsionssteif ist. Die radiale Überlappung, die in Stauchlage einen Formschluss der einzelnen Metallschlauchsegmente bzw.-wicklungen untereinander bestehen lässt, kann also entfallen. Hierdurch wird der Weg für Axialbewegungen länger. Insbesondere wird aber auch die Reibung zwischen den einzelnen Segmenten bzw. Wicklungen verringert, was die Beweglichkeit des Metallschlauchs und somit des gesamten Leitungselementes nochmals vorteilhaft erhöht. Es gibt hierbei viele verschiedene Möglichkeiten, den Metallschlauch herzustellen. Wichtig ist nur, dass etwa noch vorhandene formschlüssige Überdeckungen von hakenförmig abgebogenen Kanten des Wicklungs- oder Segmentprofils nicht im Formschluss bleiben, wenn der Metallschlauch gestaucht wird. Im Extremfall ist auch ein Metallschlauch denkbar, dessen Wicklungen sich nicht überlappen.

Schließlich kann das erfindungsgemäße Leitungselement in wiederum an sich bekannter Weise mit einem Außengeflecht versehen sein, das das Leitungselement vor zu großen Auslenkungen beim Strecken und bei Winkelbewegungen sowie Lateralverschiebungen schützt und gleichzeitig einen mechanischen Schutz gegen Steinschlag oder ähnliches bietet.

Ein Ausführungsbeispiel, das nicht unter den Anspruch 1 fällt, ist im folgenden an Hand der beigefügten Zeichnungen näher beschrieben und erläutert. Es zeigen:
- Figur 1: eine schematische Ansicht eines flexiblen Leitungselements;
- Figur 2: ein Diagramm der Messergebnisse der dynamischen Transfersteifigkeit eines Leitungselements.

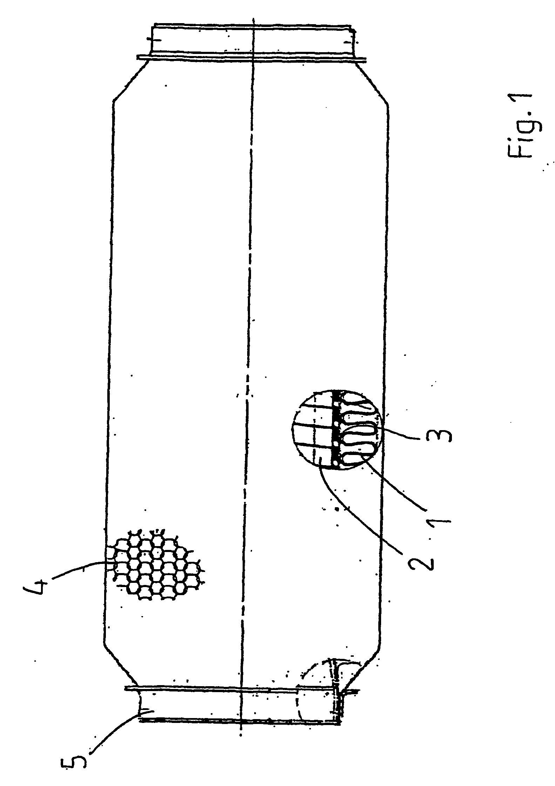

Figur 1 zeigt schematisch ein flexibles Leitungselement. Es besteht aus einem ringgewellten Metallbalg 1, einem koaxial innerhalb diesem angeordneten Metallschlauch 2, der hier als Agraffschlauch ausgebildet ist, einem zwischen diesen beiden Bauteilen angeordneten, als Gestrickemantel ausgebildeten Abstandhalter 3 sowie einem als Gestrickschlauch ausgebildeten Außengestricke 4, das an den beiden Enden des Leitungselements über jeweils eine Endhülse 5 am Metallbalg 1 festgelegt ist.

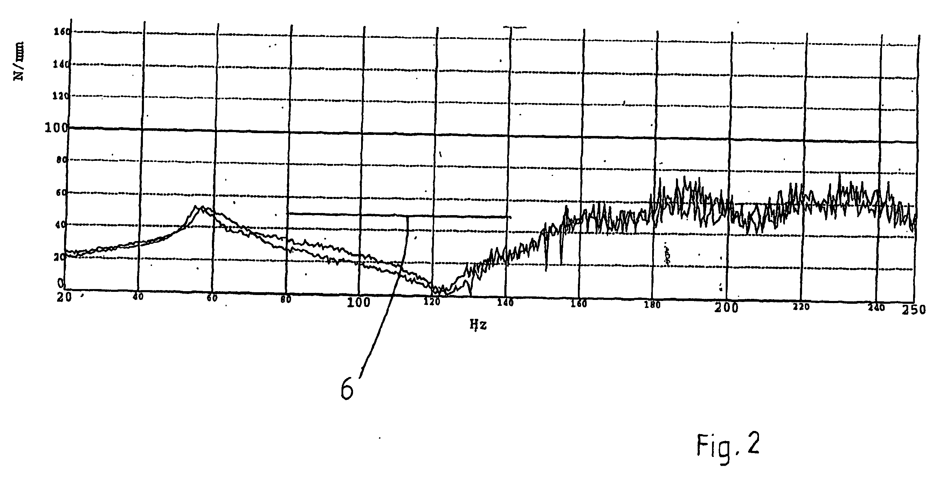

Wie Figur 2 zeigt, ist dieses Beispiel eines flexiblen Leitungselements so ausgelegt, dass seine dynamische Transfersteifigkeit in Axialrichtung über einen Bereich von etwa 65 Hz bis etwa 150 Hz unter 50 N/mm liegt. Das dargestellte Diagramm enthält die Messergebnisse von zwei Leitungselementen, wobei eine Kraft je Auslenkung in N/mm über die Frequenz in Hertz aufgezeichnet ist. Die Messung erfolgte bei einer Anregungsamplitude von 0,1 mm und Raumtemperatur. Sehr deutlich ist zu erkennen, dass die Transfersteifigkeit stark von der Anregungsfrequenz abhängt. Mit dem Bezugszeichen 6 ist für einen Frequenzbereich von 80 bis 140 Hz (dies entspricht bei einem Vierzylinder-Reihenmotor der zweiten Motorordnung bei Drehzahlen von 2400 bis 4200 1/Minute) die erfindungsgemäße Grenze von 50 N/mm für die dynamische Transfersteifigkeit eingetragen. Die vorliegenden Ausführungsbeispiele sind bewusst gerade in diesem Bereich in ihrer Steifigkeit optimiert, da der entsprechende Drehzahlbereich bei Vierzylinder-Motoren im normalen Alltagsbetrieb des Fahrzeugs ständig durchfahren wird.

## Patentansprüche

1. Flexibles Leitungselement, insbesondere für die Abgasanlage eines Kraftfahrzeugs, mit einem schraubengangförmigen oder ringgewellten Metallbalg (1), mit einem koaxial innerhalb des Metallbalgs (1) angeordneten, schraubengangförmig gewickelten oder ringförmige Segmente aufweisenden Metallschlauch (2), dessen Außenquerschnitt kleiner als der lichte Innenquerschnitt des Metallbalgs (1) ist, und mit einem den Metallbalg (1) außen zumindest bereichsweise umgebenden Außengestricke (4),
**dadurch gekennzeichnet,**
**dass** das flexible Leitungselement so ausgestaltet ist, dass seine dynamische Transfersteifigkeit in Axialrichtung bei einer Anregungsamplitude von 0,1 mm und Raumtemperatur über einen Frequenzbereich der Anregungsschwingung von 80 Hz bis 140 Hz hinweg unter 50 N/mm liegt, wobei der Metallschlauch (2) so ausgebildet ist, dass die einzelnen Wicklungen oder die einzelnen ringförmigen Segmente zumindest in der Stauchlage des Metallschlauchs (2) keinen Formschluss mit der jeweils benachbarten Wicklung oder dem jeweils benachbarten Segment aufweisen.

2. Flexibles Leitungselement nach Anspruch 1,
**dadurch gekennzeichnet,**
**dass** seine dynamische Transfersteifigkeit über einen Frequenzbereich der Anregungsschwingung von 20 Hz bis 250 Hz hinweg unter 50 N/mm liegt.

3. Flexibles Leitungselement nach einem der Ansprüche 1 oder 2,
**dadurch gekennzeichnet,**
**dass** seine dynamische Transfersteifigkeit über einen Frequenzbereich der Anregungsschwingung von 0 Hz bis 250 Hz hinweg unter 50 N/mm liegt.

4. Flexibles Leitungselement nach einem der Ansprüche 1 bis 3,
**dadurch gekennzeichnet,**
**dass** der Innendurchmesser des Außengestrickes (4) kleiner ist als der Außendurchmesser des Metallbalgs (1).

5. Flexibles Leitungselement nach einem der Ansprüche 1 bis 4,
**dadurch gekennzeichnet,**
**dass** es an seinen Enden jeweils eine das Außengestricke (4) am jeweiligen Metallbalgende festlegende Endhülse (5) aufweist.

6. Flexibles Leitungselement nach einem der Ansprüche 1 bis 5,
**dadurch gekennzeichnet,**
**dass** der Metallbalg (1) eine Wandstärke von weniger als 0,2 mm aufweist.

7. Flexibles Leitungselement nach einem der Ansprüche 1 bis 6,
**dadurch gekennzeichnet,**
**dass** mindestens ein zwischen dem Metallbalg (1) und dem Metallschlauch (2) angeordneter Abstandhalter (3) vorhanden ist.

8. Flexibles Leitungselement nach Anspruch 7,
**dadurch gekennzeichnet,**
**dass** der Abstandhalter (3) aus einem Gestricke gebildet ist.

9. Flexibles Leitungselement nach einem der Ansprüche 1 bis 8,
**dadurch gekennzeichnet,**
**dass** ein den Metallbalg (1) und das Außengestricke (4) außen zumindest bereichsweise umgebendes Außengeflecht vorhanden ist.

## Claims

1. A flexible conduit element, particularly for the exhaust system of a motor vehicle, with a helical or annularly corrugated metal bellows (1), a metal tube (2), which is disposed coaxially within the metal bellows (1) and is helically wound or has annular segments and whose outer cross-section is smaller than the free inner cross-section of the metal bellows (1) and an outer reticulated structure (4) externally surrounding the metal bellows (1), at least in areas, **characterised in that** the flexible conduit element is so constructed that its dynamic stiffness in the axial direction at an excitation amplitude of 0.1 mm and room temperature is below 50 N/mm over a frequency range of the excitation vibration of 80 Hz to 140 Hz, and **in that** the metal tube (2) is so constructed that the individual windings or the individual annular segments do not have a form lock with the adjacent winding or the adjacent segment, at least in the compressed position of the metal tube (2).

2. A flexible conduit element as claimed in Claim 1, **characterised in that** its dynamic transfer stiffness is below 50 N/mm over a frequency range of the excitation vibration of 20 Hz to 250 Hz.

3. A flexible conduit element as claimed in one of Claims 1 or 2, **characterised in that** its dynamic transfer stiffness is below 50 N/mm over a frequency range of the excitation vibration of 0 Hz to 250 Hz.

4. A flexible conduit element as claimed in one of Claims 1 to 3, **characterised in that** the internal diameter of the outer reticulated structure (4) is smaller than the external diameter of the metal bellows (1).

5. A flexible conduit element as claimed in one of Claims 1 to 4, **characterised in that** it has a respective end sleeve (5) at its ends securing the outer reticulated structure (4) to the respective end of the metal bellows.

6. A flexible conduit element as claimed in one of Claims 1 to 5, **characterised in that** the metal bellows (1) has a wall thickness of less than 0.2 mm.

7. A flexible conduit element as claimed in one of Claims 1 to 6, **characterised in that** there is at least one spacer (3) disposed between the metal bellows (1) and the metal tube (2).

8. A flexible conduit element as claimed in Claim 7, **characterized in that** the spacer (3) is constituted by a reticulated structure.

9. A flexible conduit element as claimed in one of Claims 1 to 8, **characterised in that** there is an outer netting which externally surrounds the metal bellows (1) and the outer reticulated structure (4), at least in regions.

## Revendications

1. Elément de conduit flexible, en particulier pour le système d'échappement d'un véhicule automobile, avec un soufflet métallique (1) en forme de pas de vis ou à spires annulaires, avec un tuyau métallique (2) enroulé en forme de pas de vis ou présentant des segments annulaires disposé coaxialement à l'intérieur du soufflet métallique (1), dont la section extérieure est plus petite que la section intérieure libre ou de passage du soufflet métallique (1), et avec un tricot extérieur (4) entourant au moins en partie extérieurement le soufflet métallique (1), **caractérisé par le fait**
**que** l'élément de conduit flexible est conçu de telle manière que sa raideur de transfert dynamique en direction axiale soit inférieure à 50 N/mm sur une plage de fréquence de la vibration d'excitation de 80 Hz à 140 Hz pour une amplitude d'excitation de 0,1 mm et à température ambiante, et que le tuyau métallique (2) est conçu de telle manière que les différents enroulements ou les différents segments annulaires ne présentent pas de liaison positive avec l'enroulement voisin ou le segment voisin au moins dans la position refoulée du tuyau métallique (2).

2. Elément de conduit flexible selon la revendication 1,
**caractérisé par le fait**
**que** sa raideur de transfert dynamique est inférieure à 50 N/mm sur une plage de fréquence de la vibration d'excitation de 20 Hz a 250 Hz.

3. Elément de conduit flexible selon l'une des revendications 1 ou 2,
**caractérisé par le fait**
**que** sa raideur de transfert dynamique est inférieure à 50 N/mm sur une plage de fréquence de la vibration d'excitation de 0 Hz à 250 Hz.

4. Elément de conduit flexible selon l'une des revendications 1 à 3,
**caractérisé par le fait**
**que** le diamètre intérieur du tricot extérieur (4) est plus petit que le diamètre extérieur du soufflet métallique (1).

5. Elément de conduit flexible selon l'une des revendications 1 à 4,
**caractérisé par le fait**
**qu'**il présente à chacune de ses extrémités un manchon terminal (5) fixant le tricot extérieur (4) aux extrémités respectives du soufflet métallique.

6. Elément de conduit flexible selon l'une des revendications 1 à 5,
**caractérisé par le fait**
**que** le soufflet métallique (1) présente une épaisseur de paroi inférieure à 0,2 mm.

7. Elément de conduit flexible selon l'une des revendications 1 à 6,
**caractérisé par le fait**
**qu'**il existe au moins une pièce d'écartement (3) disposés entre le soufflet métallique (1) et le tuyau métallique (2).

8. Elément de conduit flexible selon la revendication 7,
**caractérisé par le fait**
**que** la pièce d'écartement (3) est formée d'un tricot.

9. Elément de conduit flexible selon l'une des revendications 1 à 8,
**caractérisé par le fait**
**qu'**il existe un treillis extérieur entourant au moins en partie extérieurement le soufflet métallique (1) et le tricot extérieur (4).
